# EUROPÄISCHE PATENTANMELDUNG

(11) **EP 4 477 933 A1**
(43) Veröffentlichungstag der Anmeldung: **18.12.2024**
(21) Anmeldenummer: 24182505.8
(22) Anmeldetag: 17.06.2024
(51) Int. Cl.: F16L 21/035, F16J 15/02

(54) **DICHTUNGSSYSTEM FÜR ROHRSEGMENTE UND VERFAHREN ZUM HERSTELLEN EINES DICHTUNGSSYSTEMS**

(30) Priorität: 16.06.2023 DE 102023115765
(71) Anmelder: Semperit AG Holding, 1100 Wien (AT)
(72) Erfinder: Mießbacher, Herwig, 8734 Lobmingtal (AT); Rappe, Niklas, 7221 Marz (AT); Göppel, Josef, 1170 Wien (AT)
(74) Vertreter: Müller Schupfner & Partner Patent- und Rechtsanwaltspartnerschaft mbB (Muc)

(57) **Zusammenfassung**

Es wird ein Dichtungssystem (1) für Rohrsegmente (14, 15) bereitgestellt, wobei das Dichtungssystem (1) als Profilkörper ausgestaltet ist, welcher sich entlang einer Profilrichtung erstreckt, wobei das Dichtungssystem (1) einen quer zu der Profilrichtung verlaufenden Querschnitt aufweist, wobei der Querschnitt sich in einer ersten Richtung und einer dazu orthogonal ausgerichteten zweiten Richtung erstreckt und umfasst: einen Lastverteilbereich (2), und einen Dichtbereich (3), wobei das Dichtungssystem (1) zumindest abschnittsweise eine Gleitschicht (5) aufweist, so dass das Dichtungssystem (1) in einem Bereich mit der Gleitschicht (5) eine geringere Reibung aufweist als in einem Bereich ohne die Gleitschicht (5). Ferner wird ein Verfahren zum Herstellen eines Dichtungssystems (1) bereitgestellt.

## Beschreibung

Die vorliegende Erfindung betrifft ein Dichtungssystem für Rohrsegmente und ein Verfahren zum Herstellen eines Dichtungssystems.

Im Stand der Technik ist es bekannt, verschiedene Schacht-Segmente eines Schafts zu kombinieren, um ein Schachtbauwerk zu errichten. Bei den Komponenten handelt es sich üblicherweise um ringförmige Bauteile. Beispielsweise werden im Kanalbau Betonrohrsegmente aufeinandergesetzt, um ein Schachtbauwerk oder Rohrbauwerk zu errichten. Zwischen den Kontaktstellen der einzelnen Segmente wird hierbei eine Dichtung eingebracht, um eine Last, welche von einem Segment auf das andere Segment ausgeübt wird, besser zu verteilen. Eine solche Lastverteilung ist vorteilhaft, da insbesondere bei Segmenten aus Beton größere Fertigungstoleranzen vorhanden sind oder Schachtsegmente nicht ordnungsgemäß montiert sind. Ferner weisen bekannte Dichtungen Vorsprünge auf, um einen Hohlraum zwischen den Segmenten besser abdichten zu können. Ein solcher Vorsprung hat jedoch den Nachteil, dass bei einem Aufeinandersetzen der einzelnen Segmente diese nur schwer aneinander entlang gleiten, wodurch eine Handhabung auf der Baustelle erschwert ist. Ferner besteht die Gefahr, dass die Segmente schief zu einander zum Liegen kommen, wodurch die Abmessungen des zu fertigenden Bauwerks von Planungen abweichen.

Daher ist es eine Aufgabe der vorliegenden Erfindung, eine Schachtdichtung bereitzustellen, welche die Montage von Rohrsegmenten auf der Baustelle erleichtert und gleichzeitig eine Dichtwirkung zwischen den Rohrsegmenten bereitstellt.

Die vorliegende Erfindung löst dieses Problem, mit einem Dichtungssystem mit den Merkmalen des Anspruchs 1 und mit einem Verfahren zum Herstellen des Dichtungssystems mit den Merkmalen des Anspruchs 12.

Gemäß einem Aspekt der vorliegenden Erfindung wird ein Dichtungssystem für Rohrsegmente bereitgestellt, wobei das Dichtungssystem als Profilkörper ausgestaltet ist, welcher sich entlang einer Profilrichtung erstreckt. Das Dichtungssystem kann einen quer zu der Profilrichtung verlaufenden Querschnitt aufweisen. Der Querschnitt kann sich in einer ersten Richtung und einer dazu orthogonal ausgerichteten zweiten Richtung erstrecken und einen Lastverteilbereich sowie einen Dichtbereich umfassen. Das Dichtungssystem kann zumindest abschnittsweise eine Gleitschicht aufweisen, sodass das Dichtungssystem in einem Bereich mit der Gleitschicht eine geringere Reibung aufweist als in einem Bereich ohne die Gleitschicht.

Gegenüber dem bekannten Stand der Technik bietet sich durch die Gleitschicht der Vorteil, dass Rohrsegmente leichter aneinander entlang gleiten können, wenn das Dichtungssystem dazwischen eingefügt ist. Ferner kann durch die Gleitschicht ein besonders einfaches und reibungsverminderndes Dichtungssystem bereitgestellt sein. Mit anderen Worten sind keine komplizierten und aufwändigen Konstruktionen oder Anwendungen von gelartigen Substanzen notwendig, um eine Gleiteigenschaft bereitzustellen. Beispielsweise kann auf Taschenkonstruktionen an dem Dichtungssystem verzichtet werden und somit eine Dauerhaftigkeit des Dichtungssystems erhöht werden. Ferner kann eine optimale Anlage zweier aneinander angrenzende Rohrsegmente realisiert sein. Genauer gesagt kann durch die Gleitschicht des Dichtungssystem zwei aufeinander aufgesetzte Rohrsegmente ohne Probleme feinjustiert werden. Gleichzeitig können durch den Dichtbereich einzelne Segmente abgedichtet werden. Genauer gesagt kann durch den Dichtbereich ein Zwischenraum zwischen zwei Segmente abgedichtet werden. Zudem ist es nicht notwendig einen Silikonsack oder dergleichen an oder angrenzend zu dem Dichtungssystem vorzusehen. Damit kann auch die Herstellung des Dichtungssystems vereinfacht werden.

Das Dichtungssystem kann als Schachtdichtung ausgestaltet sein. Die Rohrsegmente können als Betonrohre ausgestaltet sein. Damit kann eine Schachtdichtung für Betonrohre (genauer gesagt für Betonrohrsegmente) bereitgestellt sein. Die Rohrsegmente können an einer Rohrsegmentfläche, an welcher sich die einzelnen Segmente zugewandt sind und ggf. kontaktieren, gestuft ausgestaltet sein. Das Dichtungssystem kann an einer solchen Stufe anordenbar sein. Genauer gesagt kann der Lastverteilbereich an einer ersten Stufenfläche angeordnet sein. Der Dichtbereich kann an einer im Wesentlichen orthogonal zu der ersten Stufenfläche stehenden zweiten Stufenfläche angeordnet sein. Somit kann das Dichtungssystem um eine Kante des Rohrsegments herum gelegt sein (in einem Einbauzustand). Damit können die einzelnen Bereiche des Dichtungssystems ihre volle Wirkung entfalten. Der Lastverteilbereich kann dazu ausgestaltet sein, einen Druck beispielsweise durch das Eigengewicht der Rohrsegmente gleichmäßig auf ein angrenzendes Rohrsegment zu verteilen. Der Dichtbereich kann einen Spalt zwischen den Segmenten abdichten. Der Profilkörper kann entlang der Profilrichtung einen im Wesentlichen gleichbleibenden Querschnitt aufweisen. Der Querschnitt kann sich im Wesentlichen orthogonal zu der Profilrichtung erstrecken. Der Querschnitt kann durch die erste Richtung und die zweite Richtung aufgespannt sein. Dabei können die erste Richtung und die zweite Richtung orthogonal zueinander ausgerichtet sein. Der Lastverteilbereich kann dazu ausgestaltet sein, eine Last an einer ersten Seite davon aufzunehmen und an einer gegenüberliegenden zweiten Seite gleichmäßig abzugeben. Folglich kann der Lastverteilbereich eine dämpfende Eigenschaft aufweisen. Der Lastverteilbereich kann plastisch ausgebildet sein. Dadurch kann sich der Lastverteilbereich an etwaige Unebenheiten beispielsweise in Rohrsegmenten, an welchen das Dichtungssystem vorgesehen ist, anpassen. Folglich kann der Lastverteilbereich dazu ausgestaltet sein, eine ebene Anlagefläche für ein weiteres Rohrsegment bereitzustellen. Der Dichtbereich kann einen Vorsprung aufweisen, der von dem Dichtungssystem vorsteht. Dadurch kann ein Kontakt des Dichtsystems zwischen zwei aneinander angrenzende Rohrsegmente sichergestellt sein. Dadurch kann eine Abdichtfunktion zwischen den Rohrsegmenten sichergestellt sein. Der Dichtbereich kann elastisch verformbar sein. Dadurch kann sich der Dichtbereich besonders gut an zwei aneinander angrenzende Rohrsegmente anpassen. Der Dichtbereich und der Lastverteilbereich können jeweils so an dem Dichtungssystem angeordnet sein, dass beide relativ zueinander verlagerbar sind. Dadurch kann eine noch bessere Anpassung an verschiedene Formen von Rohrsegmenten bereitgestellt sein. Die Reibung, auch Friktion oder Reibungswiderstand genannt, kann eine Kraft sein, die zwischen Körpern wirkt, die einander berühren. Die Reibung erschwert dann eine Bewegung der Körper relativ zueinander. Um eine Bewegung der beiden Körper relativ zueinander zu bewirken, ist Arbeit notwendig. Wenn bei einer solchen Relativbewegung Reibung auftritt, wird ein Teil der Arbeit durch Dissipation in Reibungswärme umgewandelt und/oder für Verschleiß eingesetzt. Im vorliegenden Fall kann es sich hauptsächlich um eine äußere Reibung handeln, die zwischen sich berührenden Außenflächen von Festkörpern auftritt. So kann es beispielsweise zwischen einem Teil des Rohrsegments und dem Dichtungssystem zu einer mechanischen Verklammerung der beiden Elemente kommen. Durch Vorsehen einer Gleitschicht an dem Dichtungssystem kann eine Relativbewegung zwischen dem Dichtungssystem und dem zu fügenden Rohrsegment beziehungsweise eine Relativbewegung zwischen zwei aneinander angrenzenden Rohrsegmenten erleichtert werden. Dadurch kann zum einen die nötige Arbeit, die aufgewendet werden muss, um die Rohrsegmente relativ zueinander zu bewegen, verringert werden und zwar in dem Ausmaß, dass das Eigengewicht des Rohrsegments zum Fügen ausreicht. Ferner kann ein Verschleiß des Dichtungssystems verringert werden. Dadurch können Schäden an einem Dichtungssystem bei Einbau des selbigen vermieden werden. Ferner können die Rohrsegmente einfacher aneinander vorgesehen werden, sodass Sitz der Rohrsegmente verbessert sein kann. Beispielsweise kann die Gleitschicht eine geringere Rauheit aufweisen, verglichen mit dem übrigen Dichtungssystem. Mit anderen Worten kann die Gleitschicht eine glattere Oberfläche aufweisen, verglichen mit dem übrigen Bezugssystem. Mit anderen Worten kann die Gleitschicht dabei so ausgestaltet sein, dass eine Adhäsion (beispielsweise eine mechanische Adhäsion) zwischen der Gleitschicht und mögliche angrenzende Kontaktflächen verringert ist, verglichen mit der Adhäsion zwischen möglicher angrenzender Kontaktflächen ohne Gleitschicht. Dadurch kann eine Verklammerung zwischen dem Dichtungssystem und einem Rohrsegment verringert oder ganz vermieden werden.

Vorzugsweise weist der Lastverteilbereich zumindest ein Loch auf. Das Loch kann dabei eine Verbindung zu einem in dem Lastverteilbereich vorgesehenen Hohlraum und der Außenwelt herstellen. Somit kann der Hohlraum über das zumindest eine Loch mit beispielsweise Sand befüllt werden.

Vorzugsweise ist die Gleitschicht zumindest abschnittsweise an dem Dichtbereich vorgesehen. Mit anderen Worten kann die Gleitschicht ausschließlich an einem Dichtbereich vorgesehen sein. Somit kann der Lastverteilbereich gleitschichtfrei ausgebildet sein. Dies hat den Vorteil, dass der Lastverteilbereich in einer fixierten beziehungsweise feststehenden Lage zwischen den Bohrsegmenten angeordnet sein soll, und somit keine Relativbewegungen zwischen den Segmenten ermöglichen soll. Dem gegenüber soll der Dichtbereich, insbesondere bei einer Anordnung an einer Stufenfläche eines Rohrsegments, einer Relativbewegung zwischen zwei aneinander angrenzenden Rohrsegmenten ermöglichen. Damit ist es vorteilhaft, dass der Gleitabschnitt entsprechend an dem Dichtbereich vorgesehen ist. Somit kann eine einfache Relativbewegung zwischen zwei aneinander angrenzenden Rohrsegmenten bereitgestellt sein.

Vorzugsweise umfasst die Gleitschicht eine harte, hochgefüllte Gummimischung. Somit kann eine Gleitschicht aus einer gleitfähigen Mischung gebildet sein. Durch die Verwendung von harten hochgefüllten Gummimischungen kann eine besonders gute Anpassungsfähigkeit der Gleitschicht an Rohrsegmente gewährleistet sein.

Vorzugsweise ist die Gleitschicht an einer Oberfläche des Dichtungssystems angeordnet. Mit anderen Worten kann die Gleitschicht eine zusätzlich vorgesehene Schicht sein, die an dem Dichtungssystem angeordnet ist. Mit anderen Worten kann das Dichtungssystem als Mehrschichtsystem gebildet sein. Dadurch kann die Gleitschicht gezielt an den Stellen vorgesehen werden, wo sie benötigt wird. Ferner kann ein Grundkörper des Dichtungssystems auf bekannte Art und Weise hergestellt werden und die Gleitschicht nachträglich aufgebracht werden.

Vorzugsweise umfasst die Gleitschicht ein internes Gleitmittel, insbesondere Paracin. Das Gleitmittel ist vorzugsweise mit dem Gummi unverträglich. Somit kann die Gleitschicht durch Beimischungen von Gleitmitteln gebildet sein. Das Dichtungssystem kann beispielsweise durch einen Extrusionsprozess hergestellt werden, wobei das interne Gleitmittel einem Ausgangsmaterial beigemischt werden kann. Dies kann als Alternative oder zusätzlich zu einer oberflächig angebrachten Gleitschicht vorgesehen sein. Die Gleitschicht kann auch aus einer Schicht strukturviskosem, fließfähigem Kautschuk (= Elastomer ohne Vernetzungsmittel) gebildet sein. Dabei kann die Relativbewegung durch Abgleiteffekte innerhalb dieser 0,5 bis 3 mm starken Schicht erfolgen. Paricin ist ein Markenname und beschreibt Methyl-12-Hydroxystearat. Paricin kann eine wachsartige Konsistenz aufweisen (Spezifikationsparameter). Ferner kann Paricin eine Säurezahl von max. 8 mg KOH/g (Prüfmethode CC 408), eine Hydroxylzahl von min. 160 mg KOH/g (Prüfmethode CC 420), einen Schmelzpunkt von min. 47 °C (Prüfmethode CC 407) und eine Iodzahl nach Wijs von max. 5 mg 12/100g (Prüfmethode CC 421) aufweisen (typisches Produktmaterial).

Vorzugsweise weist die Gleitschicht einen Gleitlack umfassend Polyurethan und/oder Polytetrafluorethylen auf. Polyurethan bietet sich hierbei besonders an, da es besonders beständig gegen Lösemittel, Chemikalien und Witterungseinflüsse ist. In diesem Fall kann Polyurethan als flüssiges System, wie beispielsweise als feuchtigkeitshärtendes Prepolymere, 2-Komponenten-Systeme und/oder als Polyurethandispersionen zum Einsatz kommen. Ferner ist auch denkbar, dass Granulate aufgeschmolzen oder gelöst werden können. Auch Polytetrafluorethylen ist ebenfalls sehr beständig und bietet damit eine dauerhafte Gleitschicht. Ferner hat PTFE einen sehr geringen Reibungskoeffizienten. PTFE weist ferner eine Haftreibung auf, die genauso groß ist, wie die Gleitreibung, sodass der Übergang von einem Stillstand zur Bewegung ohne Ruck stattfindet. Dies ist besonders vorteilhaft, während dem Montageprozess mehrerer Rohrsegmente aneinander.

Vorzugsweise weist die Gleitschicht einen Gleitlack mit einer Schichtdicke von 0,001 mm bis 1 mm, vorzugsweise von 0,005 mm bis 0,5 mm auf. Ein Gleitlack hat den Vorteil, dass dieser ohne Schwierigkeiten an verschiedenen geometrischen Ausgestaltungen des Dichtungssystems angeordnet werden kann. Die Schichtdicke in einem Bereich von 0,001 mm bis 1 mm gewährleistet eine effiziente Herstellung (hinsichtlich Toleranzbereich) bei einer gleichzeitigen zufriedenstellenden Gleiteigenschaft. Der Bereich von 0,05 mm bis 0,5 mm hat gezeigt, dass hierbei die besten Gleiteigenschaften erreicht werden können. Selbst bei Erhebungen eines Rohrsegments, welche zumindest teilweise in den Gleitsack eindringen, kann dieser noch eine ausreichende Gleitfähigkeit bereitstellen.

Vorzugsweise ist die Gleitschicht als Folie ausgestaltet. Die Folie kann besonders leicht bereitgestellt sein und an entsprechenden Stellen des Dichtungssystems angeordnet werden. Damit können besonders die Kontaktstellen zwischen Dichtungssystem und abzudichtenden Elementen mit der Gleitschicht in Form einer Folie versehen werden.

Vorzugsweise ist die Folie als eine PE-Folie ausgebildet. Die PE-Folie kann eine hohe Zähigkeit, sehr gute elektrische Eigenschaften, sehr geringe Wasseraufnahme, geringe Wasserdampfdurchlässigkeit, hohe Beständigkeit gegen den Angriff durch Chemikalien, Beständigkeit gegen Spannungsrissbildung und/oder gute Ver- bzw. Bearbeitbarkeit aufweisen. Dadurch bieten sich Vorteile bei der Verwendung der PE-Folie besonders bei einer Verwendung zur Abdichtung zwischen zwei Betonrohrsegmenten.

Vorzugsweise ist die Folie perforiert. Mit anderen Worten kann die Folie eine Vielzahl von Perforationen aufweisen. Dadurch kann die Folie eine gesteigerte Dehnfähigkeit aufweise, was insbesondere die Montage der Folie erleichtert.

Vorzugsweise weist die Gleitschicht eine Gleitfolie mit einer Gleitschichtdicke von 0,05 mm bis 5 mm, vorzugsweise von 0,1 mm bis 1mm auf. Die Gleitfolie bietet den Vorteil, dass diese separat hergestellt werden kann und nachträglich an das Dichtungssystem angebracht werden kann. Insbesondere kann dadurch gezielt an bestimmten Abschnitten des Dichtungssystems die Gleitfolie angebracht werden.

Ferner ist denkbar, dass bei einem Extrusionsherstellungsverfahren des Dichtungssystems die Gleitfolie zugeführt wird und das Dichtungssystem auf diese Weise hergestellt wird. Die Schichtdicke von 0,05 mm bis 5 mm gewährleistet eine ausreichend gute Handhabbarkeit der Gleitfolie. In Versuchen hat sich gezeigt, dass bei einer Schichtdicke von 0,1 mm bis 1 mm stets eine gute Gleitfähigkeit erreicht werden kann, bei effizientem Materialeinsatz.

Vorzugsweise umfasst die Gleitschicht Polyethylen, Polypropylen, Polyamid, ultrahochmolekulares Polyethylen, Kautschuk und/oder Polytetrafluorethylen. Polyethylen weist eine besonders niedrige Festigkeit, Härte und Steifigkeit auf, besitzt aber eine hohe Dehnbarkeit und Schlagzähigkeit. Dadurch ist eine Gleitschicht, die Polyethylen umfasst, besonders dauerhaft. Ferner weist Polyethylen eine geringe Gleitreibung auf (was die Gleiteigenschaften besonders positiv beeinflusst). Polypropylen besitzt eine ausgezeichnete Widerstandsfähigkeit gegen Ermüdung. Daher kann selbst bei kleineren öfters auftretenden Bewegungen zwischen zwei angrenzenden Rohrsegmenten ein Ermüden der Gleitschicht vermieden werden. Ferner weist Polypropylen auch eine geringe Gleitreibung auf. Polyamid weist eine hohe Festigkeit und Zähigkeit auf, sodass auch hier eine gute Dauerhaftigkeit der Gleitschicht bereitgestellt werden kann. Ferner ist Polyamid besonders vorteilhaft verarbeitbar. Daher kann die Herstellung besonders einfach realisiert sein. Polyamid weist zudem eine besonders glatte Oberfläche auf, wodurch es besonders gut als Gleitschicht geeignet ist. Ultrahochmolekulares Polyethylen (PE-UHMW) weist eine besonders hohe Verschleißfestigkeit auf. Ferner ist ein Abrieb bei Kontaktreibung besonders gering. Daher kann mit ultrahochmolekularen Polyethylen besonders die Gleitschicht mit geringen Schichtdicken realisiert sein. Polytetrafluorethylen (PTFE), welches auch unter dem Handelsnamen Teflon der Firma Dupont bekannt ist, weist eine besonders glatte Oberfläche aufweist, sodass sehr gute Gleiteigenschaften bereitgestellt werden können.

Vorzugsweise weist der Lastverteilbereich einen Hohlraum auf. Durch einen Hohlraum kann sich der Lastverteilbereich besonders gut an unebene Oberflächen einer Rohrsegmentfläche von Ringsegmenten anpassen. Mit anderen Worten kann ein Hohlraum eine gewisse elastische Eigenschaft des Lastverteilbereichs verstärken. Ferner kann der Hohlraum einen frühen Kontakt zwischen den Segmenten bereitstellen, selbst wenn diese sich noch nicht vollständig berühren. Dadurch kann eine Manövrierbarkeit eines aufzusetzenden Rohrsegments verbessert und vereinfacht werden.

Vorzugsweise ist der zumindest eine Hohlraum mit einer plastischen Masse gefüllt oder befüllbar. Eine plastische Masse kann beispielsweise unvulkanisierter Gummi (Kautschuk) sein. Der Gummi kann den Hohlraum voll ausfüllen. Mit einem Gummi gefüllten Hohlraum kann der Lastverteilbereich selbst bei großer Belastung (z.B. bei schweren Segmenten) eine vorteilhafte Lastverteilung bewirken. Der Gummi kann geschäumt in dem Hohlraum vorgesehen sein. Damit kann das Gewicht des Dichtungssystems reduziert sein. Eine Ausführung mit einer plastischen Masse kann die Widerstandsfähigkeit des Lastverteilbereichs erhöhen. Ferner kann ein elastischer Widerstand gegen Verformung erhöht werden, wodurch selbst große und schwere Rohrsegmente durch das Dichtungssystem abgedichtet werden können. Ferner kann eine plastische Masse bei einem Herstellungsprozess, welcher beispielsweise durch einen Extrusionsprozess realisiert ist, einfach direkt mit in den zumindest einen Hohlraum des Lastverteilbereichs angebracht werden. Dadurch können die nachträglichen Arbeiten, um das Dichtungssystem einsatzbereit zu machen, reduziert sein. Mit anderen Worten kann das Dichtungssystem vollständig extrudiert werden, ohne dass irgendwelche Nacharbeiten nötig sind. Vorzugsweise weist der Lastverteilbereich mehrere Hohlräume auf.

Vorzugsweise ist der zumindest eine Hohlraum mit granularem Material, insbesondere mit Sand befüllt oder befüllbar. Das granulare Material weist eine noch größere Beständigkeit gegen Verformung auf. Dadurch kann ein vollständiges Zusammendrücken des Lastverteilbereichs vermieden werden. Dies ist jedoch nur dann relevant, wenn besonders schwere und große Rohrsegmente aufeinander aufgebracht werden und diese gegebenenfalls nachträglich noch mit einer Last beaufschlagt werden. Hierbei kann es vorkommen, dass der Lastverteilbereich von dem Dichtbereich abgetrennt wird. Durch eine granulare Füllung des zumindest einen Hohlraums kann ein gewisser Abstand zwischen den Rohrsegmenten beibehalten werden, wodurch verhindert werden kann, dass sich der Lastverteilbereich und der Dichtbereich voneinander trennen (z.B. voneinander abgeschert werden).

Vorzugsweise weist der Lastverteilbereich ausschließlich einen Hohlraum auf. Durch das Vorsehen nur eines einzigen Hohlraums in dem Lastverteilbereich, kann sichergestellt sein, dass die Querschnittsform nicht zu kompliziert wird. Mit anderen Worten kann ein Hohlraum problemlos durch ein Extrusionsverfahren hergestellt werden, wohingegen eine Vielzahl von Hohlräumen zunehmend schwierig herzustellen ist. Vielmehr kann bei einem Hohlraum eine Verformung des selbigen bei einem Zusammensetzen der Rohrsegmente genau geplant sein, wohingegen bei Vorsehen von mehreren Hohlräumen eine Verformung davon schwerer absehbar ist. Mit anderen Worten kann das gesamte Dichtungssystem ausschließlich einen Hohlraum (d.h. in dem Lastverteilbereich) aufweisen.

Vorzugsweise ist der Dichtbereich hohlraumfrei ausgebildet. Mit anderen Worten kann der Dichtbereich keinen Hohlraum aufweisen. Hohlraum im vorliegenden Sinne kann ein freies Volumen sein, das für das bloße menschliche Auge erkennbar ist. Mit anderen Worten ist damit kein Porenraum gemeint. Vielmehr gibt es im Stand der Technik Schaftdichtungssysteme, die einen Dichtbereich mit einem oder mehreren Hohlräumen aufweisen. Dies ist jedoch nachteilig, da dies zu einer Veränderung der Form des Dichtbereichs führt, wodurch die Dichteigenschaft nicht zufriedenstellend bereitgestellt werden kann. Ferner ist der Dichtbereich ohne Hohlraum einfacher herstellbar. Ein Hohlraum kann so definiert sein, dass es ein Raum ist, der an zumindest vier Seiten (d.h. im Querschnitt des Dichtungssystems) umschlossen ist.

Vorzugsweise weist der Dichtbereich einen keilförmigen Abschnitt auf. Ein keilförmiger Abschnitt kann im Querschnitt eine im Wesentlichen dreieckige Grundform aufweisen. Ein Keil kann dabei zwei Seitenflächen aufweisen, die unter einem spitzen Winkel zusammenlaufen. Hierbei umfasst ein keilförmiger Körper auch Formen, bei denen zumindest eine Seitenfläche eine gebogene Form aufweist.

Durch den keilförmigen Abschnitt, kann sichergestellt werden, dass der Dichtbereich in Kontakt mit beiden Rohrsegmenten kommt. Dadurch kann eine Abdichtung zwischen den Rohrsegmenten sichergestellt werden.

Vorzugsweise ist das Dichtungssystem insgesamt keilförmig ausgestaltet. Mit anderen Worten kann der Lastverteilbereich und der Dichtbereich aufeinander angeordnet sein. Somit kann ein Dichtungssystem bereitgestellt sein, welches in seiner Haupterstreckungsrichtung einen keilförmigen Querschnitt aufweist. Dadurch kann das Dichtungssystem auch in kleinen Zwischenräumen angeordnet werden. Ferner kann zwischen dem Lastaufnahmebereich oder Lastverteilbereich und dem Dichtbereich ein Spalt angeordnet sein, so dass eine Relativbewegung zwischen Lastverteilbereich und Dichtbereich ermöglicht ist. Folglich kann ein Einsetzen des Dichtungssystems vereinfacht werden.

Vorzugsweise weist der keilförmige Abschnitt zwei unter einen spitzen Winkel zusammenlaufende Seitenflächen auf, wobei die Gleitschicht zumindest bei einer der Seitenflächen in einem virtuellen weiteren Verlauf, der zumindest eine Seitenfläche von dem Dichtbereich vorstehen kann. Mit anderen Worten kann die Gleitschicht in einer Verlängerung einer Seitenfläche vorgesehen sein. Die Gleitschicht kann von dem Dichtbereich vorstehen. Vorzugsweise steht die Gleitschicht von dem Bereich des keilförmigen Abschnitts vor, welcher die größte Dicke aufweist. Damit kann gewährleistet sein, dass der Bereich, welcher zuerst mit den beiden Rohrsegmenten in Kontakt kommt, eine besonders gute Gleitfähigkeit aufweist. In diesem Bereich ist zu erwarten, dass die höchsten Reibungskräfte auftreten. Daher ist es in diesem Bereich besonders vorteilhaft, wenn er gut an den Rohrsegmenten entlang gleitet. Durch das freie Vorstehen der Gleitschicht von dem keilförmigen Abschnitt kann sich die Gleitfläche optimal zwischen dem Rohrsegment und dem Dichtungssystem anordnen, sodass die Reibung zwischen Dichtungssystem und Rohrsegment verringert sein kann. Mit dem virtuellen weiteren Verlauf der Seitenfläche ist gemeint, dass diese Seitenfläche des Dichtbereichs schon geendet hat, die Gleitschicht jedoch einen fiktiven weiteren Verlauf (d.h. so wie die Seitenfläche bisher verlaufen ist) weiter verläuft. Dadurch kann eine optimale Anpassung der Gleitschicht an das Rohrsegment und das Dichtungssystem gewährleistet werden. Ferner kann verhindert werden, dass die Gleitschicht von dem Dichtungselement getrennt wird.

Es kann auch vorteilhaft sein, dass die Gleitschicht zumindest teilweise den Endseitenrücksprung umschließt. Mit anderen Worten kann die Gleitschicht über das Ende des keilförmigen Abschnitts hinaus ragen. Somit kann die Gleitschicht sich über die Dichtfläche hinaus erstrecken.

Der keilförmige Abschnitt kann auch als Dichtkeil bezeichnet sein. Der keilförmige Abschnitt kann einen Keilfuß und eine Keilschräge aufweisen. Der Keilfuß und die Keilschräge können dabei jeweils eine Seitenfläche des keilförmigen Abschnitts sein. Die Gleitschicht kann vollflächig oder partiell über den Seitenflächen angeordnet sein. In einer bevorzugten Ausführungsform ragt die Gleitschicht über die Keilfläche hinaus. Mit anderen Worten kann die Gleitschicht von dem Keilfuß und/oder von der Keilschräge in der zweiten Richtung vorstehen.

Vorzugsweise weist der keilförmige Abschnitt zwei unter einem spitzen Winkel zusammenlaufende Seitenflächen auf, wobei eine die beiden Seitenflächen verbindende Endfläche, welche dem spitzen Winkel gegenüberliegt, einen Endseitenrücksprung aufweist. Der Endseitenrücksprung kann eine Vertiefung oder eine Ausformung an dem keilförmigen Abschnitt sein. Dadurch, dass der Endseitenrücksprung an der Endfläche des keilförmigen Abschnitts angeordnet ist, kann gewährleistet werden, dass sich der keilförmige Abschnitt leichter elastisch deformieren lässt (z.B. in der ersten Richtung zusammendrücken lässt). Vorzugsweise ist der Endseitenrücksprung angrenzend an der Keilschräge angeordnet. Dadurch kann am Ende der Keilschräge ausreichend Platz geschaffen werden, um die Gleitschicht anzuordnen, welche von der Keilschräge vorragt. Ferner kann durch einen Rücksprung die benötigte Materiallänge für das Dichtungssystem insgesamt reduziert sein. Vorzugsweise umfasst das Dichtungssystem einen Verbindungsbereich, der zwischen dem Lastverteilbereich und dem Dichtbereich vorgesehen ist und diese Verbindet.

Vorzugsweise ist die Gleitschicht ist die Gleitschicht so vorgesehen, dass sie sich über den Verbindungsbereich und/oder über die Endseite und/oder den Rückseitenrücksprung erstreckt. Dadurch kann die Gleitschicht abhängig von der Ausformung der zu fügenden Rohrsegmente überall dort vorgesehen sein, wo eine vorteilhafte relative Bewegung zwischen den Segmenten gewünscht ist.

Vorzugsweise liegt ein Verhältnis der Erstreckung der Endfläche in der ersten Richtung zu der Erstreckung des Endseitenrücksprung in der zweiten Richtung in einem Bereich von 2 bis 3. Mit anderen Worten bezieht sich das Verhältnis auf eine Tiefe des Endseitenrücksprungs sowie auf eine Erstreckung der Endfläche. Somit sind beide Abmessungen abhängig voneinander. Steigert sich die Erstreckung der Endfläche in der ersten Richtung, erhöht sich auch die Vertiefung des Endseitenrücksprungs. Dabei wurde herausgefunden, da die Erstreckung der Endfläche die Dicke des keilförmigen Abschnitts definiert, dass bei einer größeren Dicke des keilförmigen Abschnitts ein tieferer Einschnitt beziehungsweise ein tieferer Endseitenrücksprung vorteilhaft ist. Insbesondere bietet dies Vorteile bei dem Zusammenfügen von zwei Rohrsegmenten mit einem dazwischen eingefügten Dichtungssystem. Insbesondere lässt sich der Dichtbereich einfacher elastisch verformen, ohne dass dieser durch eines der Rohrsegmente verschoben wird. Dadurch kann sichergestellt sein, dass der Dichtbereich den Spalt zwischen zwei aneinander angrenzenden Rohrsegmenten zuverlässig abdichtet.

Vorzugsweise weist der keilförmige Abschnitt zwei unter einem spitzen Winkel zusammenlaufende Seitenflächen auf, wobei zumindest eine der Seitenflächen zumindest einen Seitenflächenrücksprung aufweist. Mit anderen Worten kann der Keilfuß zumindest einen Seitenflächenrücksprung aufweisen. Der Keilfuß beziehungsweise die Seitenfläche, an der der zumindest eine Seitenflächenrücksprung angeordnet ist, kann mit dem Rohrsegment in Kontakt sein, an welchem das Dichtungssystem initial vorgesehen wird. Ein anderes Rohrsegment kann dann auf das initial vorgesehene Rohrsegment zubewegt werden. Bei Kontakt des Dichtbereichs mit dem bewegten Rohrsegment kann sich der Dichtbereich aufgrund des zumindest einen Seitenflächenrücksprungs vorteilhaft elastisch verformen, sodass der Dichtbereich zu einer satten Anlage an dem bewegten Rohrsegment kommt.

Dadurch kann die Dichtwirkung erhöht werden. Ferner kann durch eine erhöht elastische Rückstellkraft, welche aufgrund des Seitenflächenrücksprungs gegeben ist, ein Anpressdruck zwischen dem Dichtbereich und den Rohrsegmenten erhöht werden. Dadurch kann die Dichtleistung des Dichtbereichs insgesamt erhöht werden. Vorzugsweise weist der zumindest eine Seitenflächenrücksprung eine abgerundete Form auf. Dies liefert den Vorteil, dass die elastische Rückstellkraft, welche bei einer Verformung des Seitenflächenrücksprungs auftritt, gesteigert sein kann. Hierdurch kann die Dichtleistung weiter erhöht werden.

Gemäß einer Ausführungsform weist zumindest eine Seitenfläche zwei Seitenflächenrücksprünge auf. Die zwei Seitenflächenrücksprünge können vorteilhafterweise eine unterschiedliche geometrische Ausgestaltung aufweisen. Dadurch können elastische Rückstellkräfte, welche aufgrund der geometrischen Ausgestaltung bewirkt werden, unterschiedlich sein, sodass sich der Dichtbereich auf unterschiedliche Belastungssituationen anpassen kann und stets eine effiziente Dichtwirkung entfalten kann.

Vorzugsweise liegt ein Verhältnis der Erstreckung des Seitenflächenrücksprungs in der ersten Richtung zu einer Erstreckung der zweiten Seitenfläche, an dem der Seitenflächenrücksprung angeordnet ist, in der zweiten Richtung in einem Bereich von 10 bis 15, vorzugsweise in einem Bereich von 12 bis 14,5. Mit anderen Worten kann durch dieses Verhältnis eine Tiefe des Seitenflächenrücksprungs im Verhältnis zu einer Erstreckung der Seitenfläche definiert werden. Damit kann eine Länge der Seitenfläche in einem Verhältnis zu einer Tiefe des zumindest einen Seitenflächenrücksprungs definiert werden. In dem Bereich von 10 bis 15 wurde herausgefunden, dass die durch die Seitenflächenrücksprünge erzeugte elastische Rückstellkraft besonders vorteilhaft bei der Verwendung von Betonrohren ist. Bei Betonrohren sind besonders große Fertigungstoleranzen vorhanden, sodass der Dichtbereich unterschiedlich stark belastet wird im Verlauf der Profilrichtung. Durch das obige Verhältnis kann eine hervorragende Anpassung erreicht werden, sodass es zu keinen Leckagestellen entlang der Profilrichtung des Dichtungssystems kommt. Der Bereich von 12 bis 14,5 liefert darüber hinaus den Vorteil, dass sowohl die bewirkte Rückstellkraft als auch die Dauerhaftigkeit gewährleistet ist.

Genauer gesagt kann die Seitenfläche, an der zumindest ein Seitenflächenrücksprung angeordnet ist, relativ zu einem Rohrsegment verschoben werden, wodurch die Gefahr besteht, dass der Dichtbereich in diesem Bereich Schaden nimmt. Durch das Verhältnis von 12 bis 14,5 konnte die Seitenfläche mit dem Seitenflächenrücksprung so stabil ausgestaltet sein, dass ein Schaden der selbigen vermieden werden kann.

Vorzugsweise umfasst das Dichtungssystem einen Verbindungsbereich, der den Dichtbereich mit dem Lastverteilbereich verbindet. Insbesondere bei der Ausführungsform, wo das Dichtungssystem um eine Kante eines Rohrsegments herumgelegt wird, kann es vorteilhaft sein, dass der Lastverteilbereich von einem Dichtbereich beabstandet ist. Diese Beabstandung wird durch den Verbindungsbereich realisiert. Dadurch kann selbst bei großen Rohrsegmentflächen der Rohrsegmente der Lastverteilbereich relativ mittig an der Rohrsegmentfläche angeordnet sein, und der Dichtbereich an einer Seitenfläche der Rohrsegmentfläche angeordnet werden. Dadurch kann ein Schaden des Dichtungssystems bei einem Zusammenführen von zwei Rohrsegmenten vermieden werden. Ferner kann das Dichtungssystem durch Vorsehen des Verbindungsbereichs besonders einfach um eine Kante herum angeordnet werden. Mit anderen Worten kann durch den Verbindungsbereich eine Soll-Knickstelle definiert sein. Die Gleitschicht ist vorzugsweise zumindest an dem Dichtbereich angeordnet.

Vorzugsweise ist die Gleitschicht zumindest abschnittsweise an dem Verbindungsbereich vorgesehen. Somit kann ein Gleiten eines Rohrsegments entlang des Verbindungsbereichs erleichtert werden. Dies ist besonders vorteilhaft, wenn der Verbindungsbereich dazu benutzt wird, den Lastverteilbereich und den Dichtbereich um eine Kante eines Rohrsegments herum zu verbinden. Hierbei kann es vorkommen, dass ein aufzusetzendes Rohrsegment mit den Verbindungsbereich zuerst in Kontakt kommt. Ist dort die Gleitschicht angeordnet, kann ein problemloses Ableiten realisiert werden, ohne, dass das Dichtungssystem Schaden nimmt.

Vorzugsweise ist die Gleitschicht mit dem Dichtbereich und dem Verbindungsbereich in Kontakt. Mit anderen Worten kann die Gleitschicht, welche in dem Verbindungsbereich angeordnet ist, gleichzeitig auch mit dem Dichtbereich in Kontakt sein. Mit anderen Worten kann die Gleitschicht an der Seite des Verbindungsbereichs angeordnet sein, an welchem der Dichtbereich anschließt. Damit kann ein Übergang zwischen dem Verbindungsbereich und dem Dichtbereich so ausgestaltet werden, dass ein Rohrsegment problemlos darüber gleitet. Auch hierbei kann verhindert werden, dass das Dichtungssystem Schaden nimmt.

Vorzugsweise liegt ein Verhältnis der Streckung des Lastverteilbereichs und des Dichtbereichs in der zweiten Richtung in einem Bereich von 0,5 bis 1, vorzugsweise in einem Bereich von 0,7 bis 0,9. Mit anderen Worten kann eine Dimensionierung des Lastverteilbereichs abhängig sein von einer Dimensionierung des Dichtbereichs. Bei großen Rohrsegmenten wird üblicherweise ein größerer Lastverteilbereich genommen, da bei größer dimensionierten Rohrsegmenten zum einen größere Lasten wirken und zum anderen größere Toleranzen durch den Lastverteilbereich ausgeglichen werden müssen. In dem obigen Verhältnis wurde festgestellt, dass insbesondere bei der Verwendung von Rohrsegmenten aus Beton die Toleranzen zufriedenstellend durch den Lastverteilbereich ausgeglichen werden können, und zum anderen eine hervorragende Dichtwirkung durch den Dichtbereich bereitgestellt werden können. In dem Bereich von 0,7 bis 0,9 bietet sich der Vorteil, dass der Dichtbereich selbst bei einem anstehenden Wasserdruck eine Abdichtung zwischen den Rohrsegmenten gewährleisten kann.

Vorzugsweise weist zumindest der Lastverteilbereich einen Berg-Tal-Abschnitt, insbesondere eine Verzahnung, zumindest abschnittsweise an dessen Oberfläche auf. Ein Berg-Tal-Abschnitt kann dadurch charakterisierend sein, dass eine Erhebung mit einer Vertiefung abwechselnd angeordnet ist. Beispielsweise kann ein solcher Abschnitt im Querschnitt ein Sägezahnprofil aufweisen. Dadurch kann der Lastverteilbereich elastisch einfacher verformbar sein, ohne dass dieser Schaden nimmt. Dadurch kann selbst bei hohen Lastspitzen eine Beschädigung des Dichtsystems vermieden werden. Bei Vorsehen eines solchen Berg-Tal-Abschnitts im Bereich des Verbindungsbereichs, kann ein leichteres Umknicken des Verbindungsbereichs realisiert werden, ohne dass es zu Schwächungen im Material des Verbindungsbereichs kommt. Dies ist dann besonders vorteilhaft, wenn das Dichtungssystem um eine Kante eines Rohrsegments herumgelegt angeordnet ist.

Gemäß einem weiteren Aspekt der vorliegenden Erfindung wird ein Verfahren zum Herstellen eines Dichtungssystems bereitgestellt, wobei das Verfahren umfasst: extrudieren eines Körpers, um das Dichtungssystem gemäß einer der obigen Ausführungsformen zu erlangen. Hierbei ist es vorteilhaft, dass durch den Extrusionsprozess das nahezu fertige Dichtungssystem erlangt werden kann. Insbesondere ist es möglich, dass keine oder nur geringe Nacharbeiten notwendig sind, um das Dichtungssystem in einen einsatzbereiten Zustand zu bringen. Bei den Nacharbeiten kann es sich beispielsweise um ein Ablängen des Dichtungssystems auf eine passende Länge handeln. Ferner kann der Lastverteilbereich mit anderen Stoffen befüllt werden. Nach einem Ablängen und eventuell Befüllen des Lastverteilbereichs werden die beiden Enden stoffschlüssig miteinander verbunden. Weitere Schritte zur Fertigstellung des Dichtungssystems sind jedoch nicht notwendig, wie beispielsweise ein Füllen eines Gleitsacks mit Gleitflüssigkeit oder dergleichen. Dadurch kann ein besonders effizientes und kostengünstiges Herstellungsverfahren bereitgestellt werden.

Ferner ist die vorliegende Erfindung auf eine Verwendung eines Dichtungssystems gemäß einer der obigen Ausführungsformen zur Abdichtung zwischen zwei Betonrohren bereitgestellt.

Einzelne Merkmale oder Ausführungsformen können mit anderen Merkmalen oder anderen Ausführungsformen kombiniert werden und so neue Ausführungsformen bilden. Vorteile und Ausgestaltungen, die in Verbindung mit den Merkmalen oder den Ausführungsformen genannt sind, gelten dann analog auch für die neuen Ausführungsformen. Vorteile und Ausgestaltungen, die in Bezug auf die Vorrichtung genannt sich, gelten analog auch für das Verfahren und die Verwendung und andersherum.

Im Folgenden werden zu bevorzugende Ausführungsformen im Detail mit Bezug auf die beigefügten Figuren beschrieben:
- **Fig.** 1: zeigt einen schematischen Querschnitt eines Dichtungssystems gemäß einer Ausführungsform der vorliegenden Erfindung.
- Fig. 2: zeigt eine schematische perspektivische Darstellung eines Dichtungssystems gemäß einer Ausführungsform der vorliegenden Erfindung.
- Fig. 3: ist eine Darstellung eines Dichtungssystems gemäß einer Ausführungsform der vorliegenden Erfindung in einem Einbauzustand zwischen zwei aneinander angrenzenden Rohrsegmente.

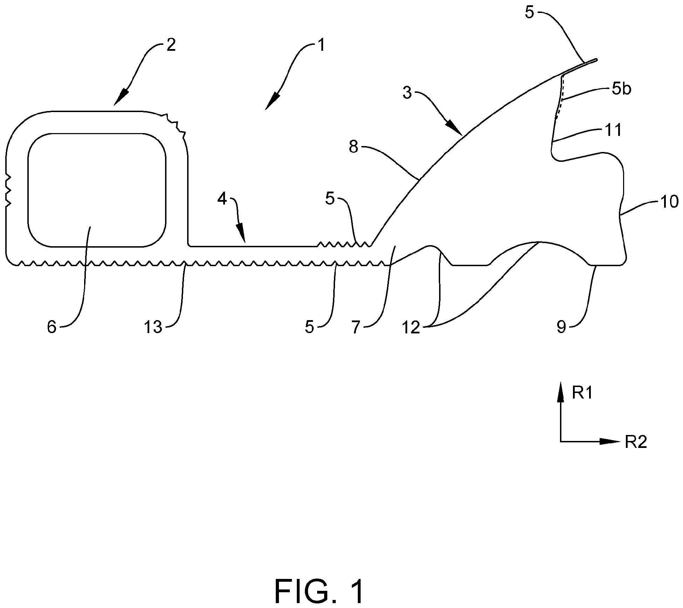

**Fig.** 1 zeigt ein Dichtungssystem 1 in einem schematischen Querschnitt gemäß einer Ausführungsform der vorliegenden Erfindung. Das Dichtungssystem 1 erstreckt sich entlang einer Profilrichtung und ist als Profilkörper ausgestaltet. Im Querschnitt weist das Dichtungssystem 1 einen Lastverteilbereich 2 und einen Dichtbereich 3 auf. Der Lastverteilbereich 2 ist bei der vorliegenden Ausführungsform mit einem Hohlraum 6 versehen. Bei der vorliegenden Ausführungsform ist der Hohlraum mit einer plastischen Masse gefüllt. Angrenzend an den Lastverteilbereich 2 ist ein Verbindungsbereich 4 vorgesehen. Angrenzend an den Verbindungsbereich 4 ist ein Dichtbereich 3 angeordnet. Der Verbindungsbereich 4 verbindet also den Lastverteilbereich 2 und den Dichtbereich 3. Der Lastverteilbereich 2, der Dichtbereich 3 und der Verbindungsbereich 4 sind integral (d. h. einstückig) ausgestaltet. Der Dichtbereich 3 weist einen keilförmigen Abschnitt 7 auf. Der keilförmige Abschnitt 7 ist aus zwei Seitenflächen 8, 9 gebildet. Die eine Seitenfläche 8 kann auch als Keilschräge 8 bezeichnet sein. Die andere Seitenfläche 9 kann als Keilfuß 9 bezeichnet sein. Ferner weist der keilförmige Abschnitt 7 eine Endseite 10 auf, die die Seitenflächen 8, 9 verbindet. Bei der vorliegenden Ausführungsform weist der keilförmige Abschnitt 7 zudem einen Endseitenrücksprung 11 auf, der Keilfuß 9 weist zwei Seitenflächenrücksprünge 12 auf. Der in Fig. 1 dargestellte Querschnitt erstreckt sich in einer ersten Richtung (in der Fig. 1 von unten nach oben) und in einer zweiten Richtung (in der Fig. 1 von links nach rechts). Der Endseitenrücksprung 11 ist in der zweiten Richtung vertieft. Die Seitenflächenrücksprünge 12 sind in der ersten Richtung vertieft. Ferner weist das Dichtungssystem eine Gleitschicht 5 auf. Die Gleitschicht ist an verschiedenen Stellen abschnittsweise an dem Dichtungssystem vorgesehen. Zum einen ist die Gleitschicht 5 an dem Verbindungsbereich 4 angeordnet. Genauer gesagt ist die Gleitschicht 5 an einem Übergang von dem Verbindungsbereich 4 zu dem teilförmigen Abschnitt 7 (d. h. dem Dichtbereich 3) vorgesehen. Ferner ist eine Gleitschicht 5 an einer virtuellen Verlängerung der Keilschräge 8 angeordnet. Genauer gesagt ragt die Gleitschicht 5 von dem keilförmigen Abschnitt 7 vor. Die vorragende Gleitschicht 5 erstreckt sich dabei im Wesentlichen entlang einer virtuellen Verlängerung der Teilschräge 8. Die Gleitschicht kann über die Keilschräge umlaufend auch an dem Endseitenrücksprung 11 und/oder der Endseite 10 angeordnet sein. Die vorragende Gleitschicht 5, welche von der Seitenfläche 9 vorragt, erstreckt sich ebenfalls entlang einer virtuellen Verlängerung des Keilfußes 9. Bei einer Ausführungsform verläuft die Gleitschicht 5b über den Endseitenrücksprung 11 (siehe gestrichelte Linie in Fig. 1). Dadurch kann auch in diesem Bereich eine Reibung zwischen dem Dichtsystem und einem angrenzenden Element (entweder Rohrsegment und/oder andere Teile des Dichtungssystems) verringert werden. Folglich kann das Fügen leichter erfolgen und eine Dichtwirkung verbessert werden. Ferner weist der Lastverteilbereich an seiner der Umgebung zugewandten Oberfläche einen Berg-Tal-Abschnitt 13 auf. Der Berg-Tal-Abschnitt 13 ist als Sägezahnabschnitt ausgebildet. Der Berg-Tal-Abschnitt 13 erstreckt sich zudem weiter entlang des Verbindungsbereichs 4.

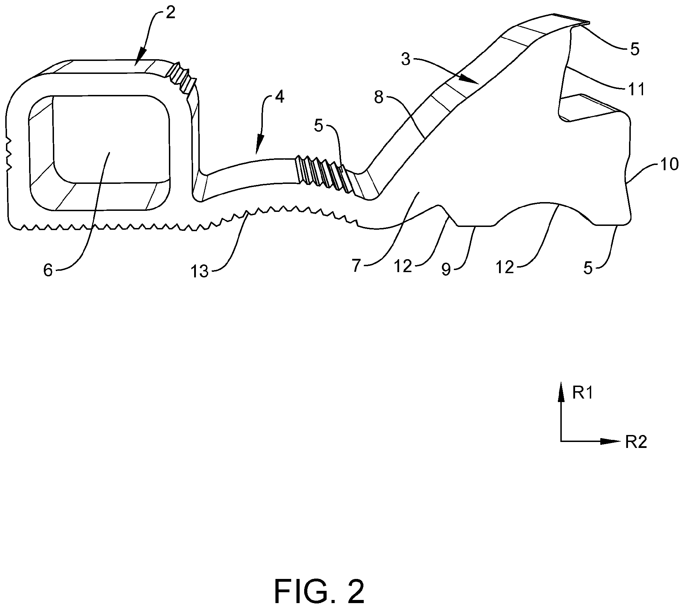

Fig. 2 zeigt eine schematische und perspektivische Darstellung eines Dichtungssystems 1 gemäß einer Ausführung der vorliegenden Erfindung. In Fig. 2 ist das Dichtungssystem als Profilkörper dargestellt. Der Profilkörper erstreckt sich dabei in der Profilkörperrichtung (in der Fig. 2 in die Blattebene hinein). Im Übrigen entspricht das in Fig. 2 dargestellte Dichtungssystem dem aus Fig. 1.

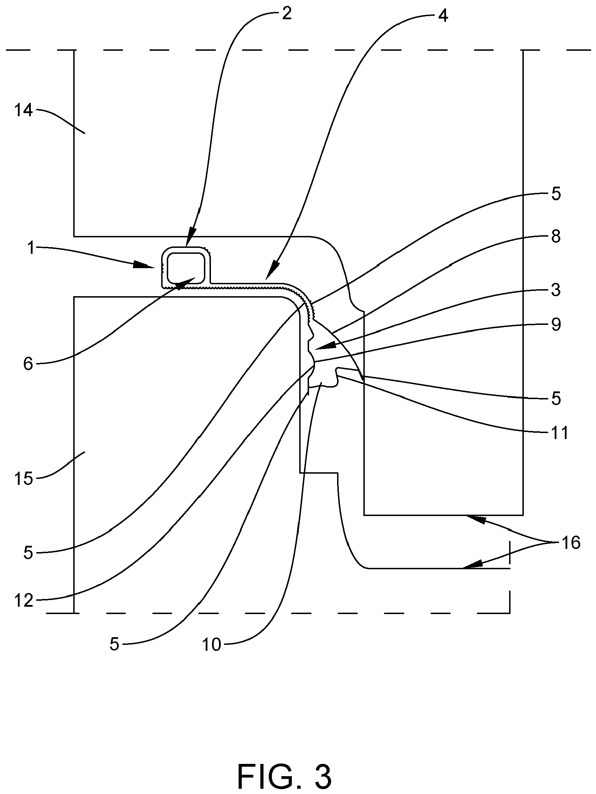

Fig. 3 ist eine schematische Querschnittsansicht des Dichtungssystems 1 der vorherigen Ausführungsformen in einem eingebauten Betriebszustand. In Fig. 3 sind ein erstes Rohrsegment 14 (Obersegment) und ein zweites Rohrsegment 15 (Untersegment) miteinander in Kontakt. Eine gegenüberliegende Fläche der beiden Rohrsegmente 14, 15 ist durch eine Rohrsegmentfläche 16 gebildet. Die Rohrsegmentfläche 16 ist bei der vorliegenden Ausführungsform mit mehreren Stufen versehen. Das Dichtungssystem 1 wird so zwischen den Rohrsegmenten 14, 15 angeordnet, sodass der Lastverteilbereich 2 mit beiden Rohrsegmenten 14, 15 in Kontakt ist. Dabei wird die meiste Last über den Lastverteilbereich 2 abgetragen. Der Verbindungsbereich 4 wird um eine Kante einer Stufe der Rohrsegmentfläche 16 umgelenkt und mündet dann in den Dichtbereich. Der Dichtbereich ist also im Wesentlichen um 90° gedreht relativ zu dem Lastverteilbereich angeordnet. Der Dichtbereich wird durch eine elastische Verformung gegen die Rohrsegmente 14 und 15 gedrückt und dichtet damit einen Spalt zwischen den Rohrsegmenten 14, 15 ab. Die Gleitschicht 5 erleichtert das Zusammensetzen der Rohrsegmente. Genauer gesagt wird das Rohrsegment 14 bei der in Fig. 3 dargestellten Ausführungsform von oben nach unten auf das Rohrsegment 15 aufgesetzt. Dabei kann es zuerst zu einer Berührung zwischen dem ersten Rohrsegment 14 und dem Dichtungssystem 1 in einem Bereich zwischen dem Verbindungsbereich 4 und dem Dichtbereich 3 kommen. In diesem Bereich ist die Gleitschicht 5 vorgesehen. Dabei ist die Gleitschicht 5 an beiden Seiten des Dichtungssystems vorgesehen, sodass diese sowohl mit dem ersten Rohrsegment 14 als auch mit dem zweiten Rohrsegment 15 in Kontakt kommen kann. Durch die geringere Reibung im Bereich der Gleitschicht kann das erste Rohrsegment 14 problemlos auf das zweite Rohrsegment 15 gleiten. Mit anderen Worten behindert das Dichtungssystem 1 ein Zusammensetzen der Rohrsegmente 14, 15 nicht. Vielmehr begünstigt das Dichtungssystem 1 eine solches Zusammenschieben, da dadurch eine Reibung zwischen dem ersten Rohrsegment 14 und dem zweiten Rohrsegment 15 vermieden wird. Werden die beiden Rohrsegmente 14, 15 weiter zusammengeführt, gelangt auch der keilförmige Abschnitt 7 des Dichtbereichs 3 mit dem ersten Rohrsegment 14 in Kontakt. Insbesondere kontaktiert der Dichtbereich 3 das erste Rohrsegment 14 mit der äußeren Spitze des keilförmigen Abschnitts 7 (genauer gesagt mit dem Ende der Keilschräge 8). In dieser Position ist wiederum eine Gleitschicht 5 vorgesehen, sodass auch dieser Kontakt mit einem Minimum an Reibung einhergeht. Dadurch ist auch weiterhin ein Zusammengleiten des ersten Rollsegments 14 und des zweiten Rollsegments 15 erleichtert. Somit können die Rohrsegmente 14, 15 problemlos zusammengeführt werden.

Die Montage des Dichtungssystems erfolgt, indem das Dichtungssystem auf das Untersegment 15 umlaufend aufgelegt wird. Das Obersegment 14 wir durch dessen Eigengewicht mit dem Untersegment 15 gekoppelt oder gefügt. Dabei baut sich eine Dichtwirkung durch das Dichtungssystem 1 auf. Insbesondere wird die Dichtwirkung durch den keilförmigen Abschnitt 7 bereitgestellt. Durch den Lastverteilbereich 2 erfolgt eine Lastverteilung durch Vergleichmäßigung.

### Bezugszeichenliste:

- 1: Dichtungssystem
- 2: Lastverteilbereich
- 3: Dichtbereich
- 4: Verbindungsbereich
- 5: Gleitschicht
- 5b: umlaufende Gleitschicht
- 6: Hohlraum
- 7: Keilförmiger Abschnitt
- 8: Seitenfläche, Keilschräge
- 9: Seitenfläche, Keilfuß
- 10: Endseite
- 11: Endseitenrücksprung
- 12: Seitenflächenrücksprung
- 13: Berg-Tal-Abschnitt
- 14: Erstes Rohrsegment
- 15: Zweites Rohrsegment
- 16: Rohrsegmentfläche

## Patentansprüche

1. Dichtungssystem (1) für Rohrsegmente (14, 15),
wobei das Dichtungssystem (1) als Profilkörper ausgestaltet ist, welcher sich entlang einer Profilrichtung erstreckt,
wobei das Dichtungssystem (1) einen quer zu der Profilrichtung verlaufenden Querschnitt aufweist,
wobei der Querschnitt sich in einer ersten Richtung und einer dazu orthogonal ausgerichteten zweiten Richtung erstreckt und umfasst:
einen Lastverteilbereich (2), und
einen Dichtbereich (3),
wobei das Dichtungssystem (1) zumindest abschnittsweise eine Gleitschicht (5) aufweist, so dass das Dichtungssystem (1) in einem Bereich mit der Gleitschicht (5) eine geringere Reibung aufweist als in einem Bereich ohne die Gleitschicht (5).

2. Dichtungssystem (1) gemäß Anspruch 1, wobei die Gleitschicht (5) zumindest abschnittsweise an dem Dichtbereich (3) vorgesehen ist.

3. Dichtungssystem (1) gemäß Anspruch 1 oder 2, wobei die Gleitschicht (5) eine harte, hochgefüllte Gummimischung umfasst.

4. Dichtungssystem (1) gemäß einem der vorhergehenden Ansprüche, wobei zumindest der Lastverteilbereich (2) einen Berg-Tal-Abschnitt, insbesondere eine Verzahnung, zumindest abschnittsweise an dessen Oberfläche aufweist.

5. Dichtungssystem (1) gemäß einem der vorhergehenden Ansprüche, wobei die Gleitschicht (5) einen Gleitlack umfassend Polyurethan und/oder Polytetrafluorethylen aufweist.

6. Dichtungssystem (1) gemäß einem der vorhergehenden Ansprüche, wobei die Gleitschicht (5) Polyethylen, Polypropylen, Polyamid, ultrahochmolekulares Polyethylen, Kautschuk und/oder Polytetrafluorethylen umfasst.

7. Dichtungssystem (1) gemäß einem der vorhergehenden Ansprüche, wobei der Lastverteilbereich (2) zumindest einen Hohlraum (6) aufweist.

8. Dichtungssystem (1) gemäß einem der vorhergehenden Ansprüche, wobei der Lastverteilbereich (2) ausschließlich einen Hohlraum aufweist.

9. Dichtungssystem (1) gemäß einem der vorhergehenden Ansprüche, wobei der Dichtbereich (3) hohlraumfrei ausgebildet ist.

10. Dichtungssystem (1) gemäß einem der vorhergehenden Ansprüche, wobei der Dichtbereich (3) einen keilförmigen Abschnitt (7) aufweist.

11. Dichtungssystem (1) gemäß Anspruch 10, wobei der keilförmige Abschnitt (7) zwei unter einem spitzen Winkel zusammenlaufende Seitenflächen (8,9) aufweist, wobei die Gleitschicht (5) zumindest von einer der Seitenflächen (8,9) in einem virtuellen weiteren Verlauf der zumindest einer Seitenfläche (8,9) von dem Dichtbereich (3) vorsteht.

12. Dichtungssystem (1) gemäß Anspruch 10 oder 11, wobei der keilförmigen Abschnitt (7) zwei unter einem spitzen Winkel zusammenlaufende Seitenflächen (8, 9) aufweist, wobei eine die beiden Seitenflächen (8, 9) verbindente Endseite (10), welche dem spitzen Winkel gegenüberliegt, einen Endseitenrücksprung (11) aufweist.

13. Dichtungssystem (1) gemäß einem der vorhergehenden Ansprüche, wobei die Gleitschicht so vorgesehen ist, dass sie sich über den Verbindungsbereich und/oder über die Endseite und/oder den Rückseitenrücksprung erstreckt.

14. Dichtungssystem (1) gemäß einem der vorhergehenden Ansprüche, ferner umfassend einen Verbindungsbereich (4), der den Dichtbereich (3) mit dem Lastverteilbereich (2) verbindet, wobei die Gleitschicht (5) vorzugsweise zumindest abschnittsweise an dem Verbindungsbereich (4) vorgesehen ist.

15. Verfahren zum Herstellen eines Dichtungssystems (1), umfassend:
Extrudieren eine Körpers, um das Dichtungssystem (1) gemäß einem der vorhergehenden Ansprüchen zu erlangen.
